# EUROPÄISCHE PATENTSCHRIFT

(11) **EP 3 535 498 B1**
(45) Veröffentlichungstag und Bekanntmachung des Hinweises auf die Patenterteilung: **23.12.2020**
(21) Anmeldenummer: 17787440.1
(22) Anmeldetag: 24.10.2017
(51) Int. Cl.: F15B 15/19, B60R 21/26, F41A 19/69, B60R 16/02

(54) **KABELBAUM FÜR EIN GASSACKMODUL EINES FAHRZEUGINSASSENSICHERHEITSSYSTEMS, GASSACKMODUL, FAHRZEUGVERKABELUNG UND FAHRZEUGINSASSENSICHERHEITSSYSTEM MIT EINEM DERARTIGEN KABELBAUM SOWIE HERSTELLUNGSVERFAHREN**
WIRING HARNESS FOR AN AIRBAG MODULE OF A VEHICLE OCCUPANT SAFETY SYSTEM, AIRBAG MODULE, VEHICLE CABLING AND VEHICLE OCCUPANT SAFETY SYSTEM HAVING A WIRING HARNESS OF THIS KIND AND A METHOD OF PRODUCTION
FAISCEAU DE CÂBLES POUR MODULE DE COUSSIN GONFLABLE D'UN SYSTÈME DE PROTECTION DES OCCUPANTS D'UN VÉHICULE, SYSTÈME DE PROTECTION DES OCCUPANTS D'UN VÉHICULE MUNI DUDIT FAISCEAU DE CÂBLES, ET PROCÉDÉ DE FABRICATION

(30) Priorität: 03.11.2016 DE 102016120988
(43) Veröffentlichungstag der Anmeldung: 11.09.2019
(73) Patentinhaber: ZF Automotive Safety Germany GmbH, 63743 Aschaffenburg (DE)
(72) Erfinder: MORHART, Johannes, 63762 Großostheim (DE); TUMMINELLO, Marco, 63843 Niedernberg (DE); RIBEIRO, Joao, 64832 Babenhausen (DE); BACHMANN, Stefan, 63872 Heimbuchenthal (DE); BOTT, Alexander, 63814 Mainaschaff (DE); STRANSFELD, Bernd, 97816 Lohr am Main, OT Ruppertshütten (DE); FLECKENSTEIN, Andreas, 97833 Habichtsthal (DE)
(74) Vertreter: ZF Patentabteilung - DIPS
(86) Internationale Anmeldenummer: PCT/EP2017/077145
(87) Internationale Veröffentlichungsnummer: WO 2018/082968

(56) Entgegenhaltungen:
- WO-A1-2007/065715
- WO-A1-2017/093313
- DE-U1- 29 608 194
- US-A1- 2004 112 239
- US-A1- 2007 257 557
- US-A1- 2013 174 755

## Beschreibung

Die Erfindung betrifft einen Kabelbaum für ein Gassackmodul eines Fahrzeuginsassensicherheitssystems mit den Merkmalen des Patentanspruchs 1. Ferner betrifft die Erfindung ein Gassackmodul, eine Fahrzeugverkabelung sowie ein Fahrzeuginsassensicherheitssystem mit einem derartigen Kabelbaum. Schließlich befasst sich die Erfindung mit einem Herstellungsverfahren sowie einem Verfahren zur Anbindung eines Aktuators an einen Fahrzeugkabelbaum.

Moderne Fahrzeuge weisen ein komplexes Fahrzeuginsassensicherheitssystem auf, das unter anderem Gassackmodule, sogenannte Airbag-Module, aufweist. Die Gassackmodule umfassen üblicherweise einen Gasgenerator, der einen pyrotechnischen Anzünder aufweist. Der Gasgenerator ist elektrisch mit Steuerkomponenten im Fahrzeug verbunden. Konkret erfolgt das Auslösen des pyrotechnischen Anzünders mittels eines elektrischen Impulses, der über die entsprechende Steuerelektronik an den Gasgenerator übermittelt wird.

Zusätzlich zu Gassackmodulen kann das Fahrzeuginsassensicherheitssystem pyrotechnische Aktuatoren aufweisen, die unterschiedliche Aufgaben wahrnehmen können. Beispielsweise werden pyrotechnische Aktuatoren eingesetzt, um das Aufblasverhalten eines Gassacks zu beeinflussen. So kann der Gassack innenliegende Fangbänder aufweisen, die bedarfsweise gekappt werden, um ein größeres Gassackvolumen bereitzustellen oder eine zeitliche Anpassung der Form des Gassacks zu ermöglichen. Derartige pyrotechnische Aktuatoren werden auch als Tether-Activation-Units bezeichnet.

Die pyrotechnischen Aktuatoren sind ebenfalls elektrisch mit der Steuerelektronik des Fahrzeugs gekoppelt und erhalten zum Auslösen einen entsprechenden elektrischen Steuerimpuls. Die Einbindung eines pyrotechnischen Aktuators in die Fahrzeugverkabelung erfolgt üblicherweise durch eine Steckverbindung zwischen dem pyrotechnischen Aktuator und einem Fahrzeugkabelbaum. Alternativ ist es aus der Praxis bekannt, den pyrotechnischen Aktuator durch eine Steckverbindung an das zugehörige Gassackmodul elektrisch zu koppeln. Bei pyrotechnischen Aktuatoren, die einem Fahrerairbagmodul zugeordnet sind, erfolgt die Anbindung des pyrotechnischen Aktuators an die fahrzeugseitige Auslösesteuerung meist durch eine Steckverbindung zwischen dem Lenkradkabelbaum und dem pyrotechnischen Aktuator.

Bei der Fahrzeugmontage führt diese Anbindung des pyrotechnischen Aktuators an den Fahrzeugkabelbaum zu einem erhöhten Montageaufwand. Einerseits muss bei der Montage das Gassackmodul elektrisch mit dem Fahrzeugkabelbaum, beispielsweise dem Lenkradkabelbaum, verbunden werden. Ferner muss eine weitere elektrische Verbindung zwischen dem pyrotechnischen Aktuator und dem Fahrzeugkabelbaum oder dem Gassackmodul hergestellt werden.

Die US 2007/0257557 A1 offenbart ein System zur Reduktion einer Feuer- oder Explosionsgefahr in einem Fahrzeug, mit einem Steckverbinder, der ein mit einer Stromquelle verbundenes erstes Verbinderteil und ein mit den elektrischen Fahrzeugkomponenten verbundenes zweites Verbinderteil aufweist. Das System umfasst ferner einen Druckgasbehälter, der über eine Schlauchleitung an eines der Verbinderteile angeschlossen ist, sowie einen Anzünder, der zum Beispiel ab einer vorgegebenen Fahrzeugverzögerung elektrisch aktiviert wird und Inertgas aus dem Druckgasbehälter in die Steckverbindung einleitet, um die Verbinderteile schnell und zuverlässig voneinander zu trennen.

In der nachveröffentlichten WO 2017/093313 A1 ist ein gattungsgemäßer Kabelbaum für ein Fahrzeuglenkrad gezeigt, der einen Kontaktstecker zur Verbindung mit einer Wickelfeder, einen Gasgeneratorstecker zum Anschluss an einen pyrotechnischen Anzünder eines Gassackmoduls und einen TAU-Stecker zur elektrischen Verbindung mit einem pyrotechnischen Aktuator des Gassackmoduls umfasst.

Aufgabe der vorliegenden Erfindung ist es, einen Kabelbaum vorzuschlagen, der den Montageaufwand für ein Fahrzeuginsassensicherheitssystem reduziert. Außerdem ist es Aufgabe der Erfindung, ein Gassackmodul, eine Fahrzeugverkabelung und ein Fahrzeuginsassensicherheitssystem mit einem solchen Kabelbaum anzugeben. Die Erfindung hat sich auch zur Aufgabe gestellt, ein Verfahren zur Herstellung eines Kabelbaums und ein Verfahren zur elektrischen Anbindung eines Aktuators an einen Fahrzeugkabelbaum anzugeben, mit welchen eine Reduktion des Montageaufwands und der damit verbundenen Kosten einhergeht.

Diese Aufgabe löst die vorliegende Erfindung hinsichtlich des Kabelbaums durch den Gegenstand des Patentanspruchs 1, im Hinblick auf das Gassackmodul durch den Gegenstand des Patentanspruchs 8, im Hinblick auf die Fahrzeugverkabelung durch den Gegenstand des Patentanspruchs 9, hinsichtlich des Fahrzeuginsassensicherheitssystems durch den Gegenstand des Patentanspruchs 11, im Hinblick auf das Herstellungsverfahren durch den Gegenstand des Patentanspruchs 12 und im Hinblick auf das Verfahren zur elektrischen Anbindung eines Aktuators an einen Fahrzeugkabelbaum durch den Gegenstand des Patentanspruchs 13. Bevorzugte Weiterbildungen der vorgenannten Lösungen sind in den jeweiligen Unteransprüchen angegeben.

Konkret schlägt die Erfindung zur Lösung der vorgenannten Aufgabe einen Kabelbaum für ein Gassackmodul eines Fahrzeuginsassensicherheitssystems, insbesondere für ein Fahrerairbagmodul, vor, wobei der Kabelbaum einen Steckverbinder zum Anschluss an einen pyrotechnischen Anzünder des Gassackmoduls, wenigstens ein mit dem Steckverbinder verbundenes Modulanschlusskabel zur Verbindung des Steckverbinders mit dem Fahrzeugkabelbaum und wenigstens eine Aktuatoreinheit mit einem pyrotechnischen Aktuator und einem mit der Aktuatoreinheit integral ausgebildeten Aktuatoranschlusskabel, das mit dem Steckverbinder verbunden ist, aufweist, wobei das Aktuatoranschlusskabel wenigstens eine Litze mit einem freien Litzenende aufweist, und wobei das Litzenende mit einem Steckelement versehen ist, das sich in einen Steckplatz des Steckverbinders erstreckt.

Der Grundgedanke der vorliegenden Erfindung besteht folglich darin, den pyrotechnischen Aktuator in den Kabelbaum des Gassackmoduls zu integrieren. Das Aktuatoranschlusskabel ist insoweit mit dem Steckverbinder vorzugsweise fest verbunden, insbesondere rastverbunden oder klemmverbunden. Das Modulanschlusskabel kann ebenfalls fest mit dem Steckverbinder verbunden sein. Insgesamt ergibt sich somit ein Kabelbaum, der bei der Montage des Fahrzeuginsassensicherheitssystems einerseits mit dem Gassackmodul durch den Steckverbinder und andererseits mit dem Fahrzeugkabelbaum zu verbinden ist, wobei gleichzeitig der pyrotechnische Aktuator in das Fahrzeuginsassensicherheitssystem eingebunden wird.

Damit erübrigt sich eine separate Verbindung des pyrotechnischen Aktuators mit dem Fahrzeugkabelbaum, beispielsweise einem Lenkradkabelbaum. Bei der Montage des Fahrzeuginsassensicherheitssystems bzw. eines Fahrzeugs ist somit lediglich eine einzige Verbindung zwischen dem Gassackmodul und dem Fahrzeugkabelbaum herzustellen. So wird mit der Verbindung des Modulanschlusskabels mit dem Gassackmodul und dem Fahrzeugkabelbaum erreicht, dass sowohl das Gassackmodul, als auch der pyrotechnische Aktuator mit den entsprechenden Steuersystemen des Fahrzeuginsassensicherheitssystems elektrisch verbunden wird.

Mit der Erfindung reduziert sich folglich der Montageaufwand, insbesondere die Montagezeit, für ein Fahrzeuginsassensicherheitssystem, was in der Folge zu einer Verringerung der Produktionskosten führt. Der Entfall einer zusätzlichen Steckverbindung, wie sie im Stand der Technik zur Anbindung des pyrotechnischen Aktuators an das Gassackmodul oder den Fahrzeugkabelbaum vorgesehen ist, reduziert außerdem den Bauraumbedarf für die Aktuatoreinheit.

Steckverbindungen neigen in Fahrzeugen, in welchen meist Vibrationen auftreten, oft zur vibrationsbedingten Geräuschentwicklung. Der bei der Erfindung vorgesehene Entfall einer zusätzlichen Steckverbindung zur Anbindung des pyrotechnischen Aktuators an den Fahrzeugkabelbaum oder das Gassackmodul reduziert somit das Risiko einer Geräuschbildung. Außerdem wird eine fehlerhafte Kabelpositionierung bzw. eine unzureichende elektrische Verbindung, die zu einer Funktionseinschränkung des Fahrzeuginsassensicherheitssystems führen kann, vermieden. Insgesamt wird damit die Betriebssicherheit des Fahrzeuginsassensicherheitssystems erhöht. Das reduziert gleichzeitig das Reklamationsrisiko.

Bei dem erfindungsgemäßen Kabelbaum ist vorgesehen, dass das Aktuatoranschlusskabel integral mit der Aktuatoreinheit ausgebildet ist. Mit anderen Worten bildet das Aktuatoranschlusskabel mit dem pyrotechnischen Aktuator eine Einheit, nämlich die Aktuatoreinheit. Vorzugsweise sind das Aktuatoranschlusskabel und der pyrotechnische Aktuator zerstörungsfrei nicht voneinander trennbar. Insofern ist bevorzugt vorgesehen, dass das Aktuatoranschlusskabel unlösbar, insbesondere steckverbinderfrei, mit dem Aktuator verbunden ist.

Das Aktuatoranschlusskabel weist erfindungsgemäß wenigstens eine Litze mit einem freien Litzenende auf. Das Litzenende ist mit einem Steckelement, beispielsweise einer Litzenendhülse, versehen. Das Steckelement, insbesondere die Litzenendhülse, erstreckt sich in einen Steckplatz des Steckverbinders. Konkret kann das Litzenende fest in einem Steckplatz des Steckverbinders verankert sein. Die Verwendung eines Steckelements zur Verbindung der Litze mit einem Steckverbinder erhöht die Flexibilität und erleichtert die Herstellung des Kabelbaums. Insbesondere kann die Litze bei der Herstellung des Kabelbaums so auf einfache Weise und mit geringem Zeitaufwand mit beliebigen Steckverbindern gekoppelt werden. Je nach Anforderung können dabei unterschiedliche Steckverbinder, beispielsweise mit unterschiedlicher Anzahl von Steckplätzen, eingesetzt werden. Dies kann im laufenden Produktionsprozess einfach je nach Kundenanforderungen geändert werden, ohne den Zeitaufwand für den Montageschritt der Verbindung des Steckverbinders mit der Litze anpassen zu müssen. Dies ist für eine effiziente und kostengünstige Serienproduktion vorteilhaft.

Im Allgemeinen kann vorgesehen sein, dass das Aktuatoranschlusskabel zwei Litzen umfasst. Die beiden Litzen können jeweils mit einem Steckplatz des Steckverbinders, beispielsweise über ein jeweils am Litzenende vorgesehenes Steckelement, fixiert sein. Bevorzugt ist vorgesehen, dass die zwei Litzen, zumindest abschnittsweise, durch einen Isolierschlauch umhüllt sind. Dabei ist nicht ausgeschlossen, dass weitere Litzen innerhalb des Isolierschlauches angeordnet sind. Die Umhüllung der Litzen mit einem Isolierschlauch erleichtert die Handhabung des Kabelbaums, verbessert die elektrische Isolation des Aktuatoranschlusskabels und schützt die Litzen vor Beschädigung.

Der Isolierschlauch kann in bevorzugten Ausführungsformen fest mit einem Gehäuse des Aktuators verbunden, insbesondere klemmverbunden sein. Auf diese Weise wird verhindert, dass der Isolierschlauch entlang der Litzen verschiebbar ist, was andernfalls dazu führen könnte, dass Litzen an Stellen freigelegt werden, die ein erhöhtes Beschädigungsrisiko aufweisen. Der fest mit dem Gehäuse des Aktuators verbundene Isolierschlauch behält hingegen seine Position bei und gewährleistet so einen Schutz für die Litzen im vom Hersteller vorgesehenen Abschnitt der Aktuatoreinheit.

Hinsichtlich des Modulanschlusskabels des erfindungsgemäßen Kabelbaums ist bevorzugt vorgesehen, dass dieses an einem fahrzeugseitigen Kabelende wenigstens einen Konnektor zur elektrischen Verbindung mit dem Fahrzeugkabelbaum aufweist. Das Modulanschlusskabel kann ebenfalls zwei oder mehrere Litzen aufweisen, an deren fahrzeugseitigen Enden jeweils ein Konnektor vorgesehen ist. Der Konnektor kann mit einem komplementären Verbindungselement steckverbindbar sein. Es ist auch möglich, dass das Modulanschlusskabel lediglich einen einzigen Konnektor aufweist, in welchen alle Litzen des Modulanschlusskabels münden, so dass zur Verbindung mit dem Fahrzeugkabelbaum lediglich eine einzige Steckverbindung hergestellt werden muss.

Gemäß einem nebengeordneten Aspekt beruht die Erfindung auf dem Gedanken, ein Gassackmodul mit einem zuvor beschriebenen Kabelbaum anzugeben. Insbesondere können das Gassackmodul und der Kabelbaum als einheitliche Verpackungseinheit vertrieben werden. Dabei kann der Kabelbaum mit dem Steckverbinder bereits am Gassackmodul vorkonnektiert sein.

Ein weiterer Aspekt der Erfindung betrifft eine Fahrzeugverkabelung mit einem zuvor beschriebenen Kabelbaum und/oder einem zuvor beschriebenen Gassackmodul. Bei der erfindungsgemäßen Fahrzeugverkabelung kann vorgesehen sein, dass der Kabelbaum, insbesondere das Modulabschlusskabel, mit einem Fahrzeugkabelbaum, insbesondere einem Lenkradkabelbaum, elektrisch verbunden ist.

Im Rahmen der vorliegenden Anmeldung wird außerdem ein Fahrzeuginsassensicherheitssystem offenbart und beansprucht, das einen hier beschriebenen Kabelbaum und/oder ein hier beschriebenes Gassackmodul und/oder eine hier beschriebene Fahrzeugverkabelung aufweist.

Ein weiterer Aspekt der Erfindung betrifft ein Verfahren zur Herstellung eines zuvor beschriebenen Kabelbaums, wobei das Verfahren die folgenden Schritte umfasst:
- Bereitstellen einer Aktuatoreinheit mit integriertem Aktuatoranschlusskabel, eines Modulanschlusskabels und eines Steckverbinders; und
- Verbinden des Modulanschlusskabels und des Aktuatorkabels mit dem Steckverbinder.

Es ist erkennbar, dass das vorgeschlagene Herstellungsverfahren die Produktion eines derartigen Kabelbaums deutlich vereinfacht. Insbesondere durch die Aktuatoreinheit, die das Aktuatoranschlusskabel bereits als integralen Bestandteil umfasst, werden zusätzliche Montageschritte bei der Herstellung des Kabelbaums vermieden. Insofern ist es nicht erforderlich, einen zusätzlichen Steckverbinder an der Aktuatoreinheit vorzusehen, mit welchem die Aktuatoreinheit an den Kabelbaum des Gassackmoduls angebunden werden kann. Vielmehr nutzen das Modulanschlusskabel und die Aktuatoreinheit einen gemeinsamen Steckverbinder. Damit reduzieren sich die Materialkosten für den Kabelbaum; gleichzeitig geht damit eine Gewichtsreduktion einher.

Die vorliegende Erfindung schlägt außerdem ein Verfahren zur elektrischen Anbindung eines Aktuators an einen Fahrzeugkabelbaum, insbesondere einen Lenkradkabelbaum, vor, wobei bei dem Verfahren folgende Schritte ausgeführt werden:
- Bereitstellung eines zuvor beschriebenen Kabelbaums, insbesondere eines Kabelbaums mit integriertem pyrotechnischem Aktuator; und
- Verbinden des Modulanschlusskabels mit dem Fahrzeugkabelbaum und/ oder einem Gassackmodul.

Bei dem erfindungsgemäßen Verfahren zur elektrischen Anbindung eines Aktuators an einen Fahrzeugkabelbaum ist in bevorzugten Varianten vorgesehen, dass ausschließlich die zuvor beschriebenen Schritte durchgeführt werden. Insbesondere kann auf weitere Schritte, beispielsweise eine zusätzliche Steckverbindung zwischen dem pyrotechnischen Aktuator und einem Fahrzeugkabelbaum oder dem Aktuator und einem Kabelbaum des Gassackmoduls, verzichtet werden. Vielmehr wird durch den Schritt des Verbindens des Modulanschlusskabels mit dem Fahrzeugkabelbaum, insbesondere mittels des wenigstens einen Konnektors und eines komplementären Verbindungselements am Fahrzeugkabelbaum, gleichzeitig das Gassackmodul und der pyrotechnische Aktuator mit dem Fahrzeugkabelbaum konnektiert. Der Vorteil der Erfindung wird auch dann erkennbar, wenn der Kabelbaum bereits fahrzeugseitig mit dem Fahrzeugkabelbaum verbunden ist. Dann kann über eine einzige Steckverbindung, nämlich zwischen dem Steckverbinder und dem Gassackmodul, gleichzeitig eine elektrische Anbindung des pyrotechnischen Anzünders an den Fahrzeugkabelbaum bewirkt werden.

Im Allgemeinen wird zum Verständnis der vorliegenden Erfindung darauf hingewiesen, dass der Steckverbinder des Kabelbaums sowohl ein Steckerteil als auch ein Buchsenteil sein kann. Mit dem Begriff "Steckverbinder" werden allgemein Verbindungselemente bezeichnet, die mit einem entsprechend komplementären Gegenelement steckverbindbar sind, wobei eines der steckverbindbaren Teile den Steckerteil und das andere steckverbindbare Teil den Buchsenteil bildet.

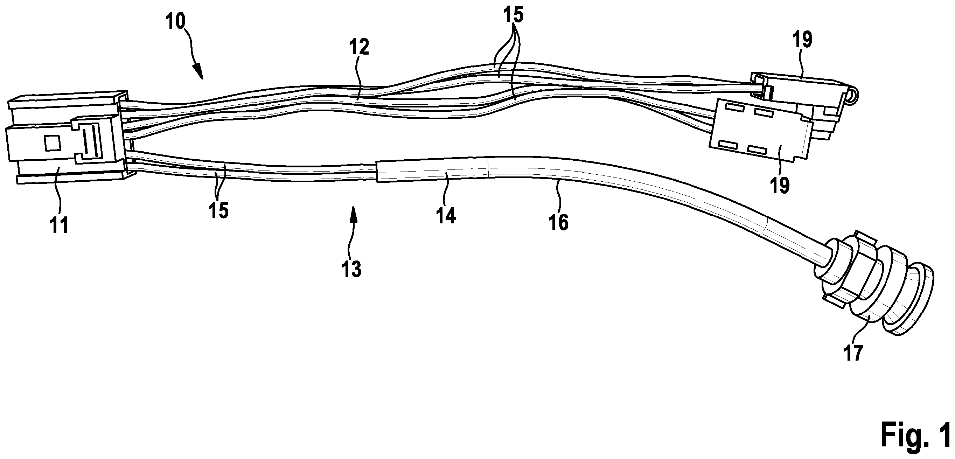

Die Erfindung wird im Folgenden anhand eines Ausführungsbeispiels unter Bezugnahme auf die beigefügten, schematischen Zeichnungen näher erläutert. Darin zeigen
- Figur 1 eine Draufsicht auf einen erfindungsgemäßen Kabelbaum nach einem bevorzugten Ausführungsbeispiel; und
- Figur 2 eine Detailansicht der Aktuatoreinheit des Kabelbaums gemäß Figur 1.

Der in den Figuren dargestellte Kabelbaum 10 umfasst einen Steckverbinder 11, in welchen ein Modulanschlusskabel 12 und ein Aktuatoranschlusskabel 14 münden. Der Kabelbaum 10 umfasst insbesondere das Modulanschlusskabel 12, mit welchem der Kabelbaum 10 mit einem Gassackmodul eines Fahrzeuginsassensicherheitssystems verbindbar ist. Dazu weist das Modulanschlusskabel 12 Litzen 15 auf, die mit ihren Litzenenden jeweils in den Steckverbinder 11, insbesondere in Steckplätze des Steckverbinders 11, münden. Die Litzen 15 sind mit dem Steckverbinder 11 fest verbunden.

An dem dem Steckverbinder 11 gegenüberliegenden Litzenende sind die Litzen 15 des Modulanschlusskabels 12 jeweils mit einem Konnektor 19 verbunden. Dabei ist bei dem dargestellten Ausführungsbeispiel vorgesehen, dass je zwei Litzen 15 in einem Konnektor 19 münden. Die Konnektoren 19 ermöglichen die Anbindung Kabelbaums 10 an einen Fahrzeugkabelbaum. Dazu können die Konnektoren 19 insbesondere mit einem komplementären Verbindungselement des Fahrzeugkabelbaums steckverbindbar sein.

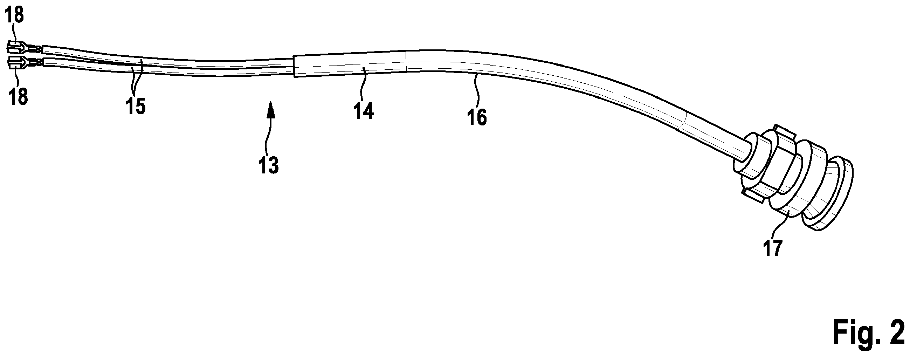

Integraler Bestandteil des Kabelbaums 10 ist außerdem eine Aktuatoreinheit 13, die im Detail in Figur 2 dargestellt ist. Die Aktuatoreinheit 13 umfasst einen pyrotechnischen Aktuator 17. Der pyrotechnische Aktuator 17 kann beispielsweise eine Tether-Activation-Unit bilden. Insoweit kann der pyrotechnische Aktuator 17 beispielsweise zum Durchtrennenden eines Fangbandes eines Gassacks eingesetzt werden. Der pyrotechnische Aktuator 17 kann auch andere Funktionen aufweisen. Beispielsweise kann der Aktuator 17 als Motorhaubenaufsteller für den passiven Fußgängerschutz eingesetzt werde. Denkbar ist es auch, den Aktuator 17 als Teil eines Gurtstraffmechanimus auszubilden.

Die Aktuatoreinheit 13 umfasst ferner das Aktuatoranschlusskabel 14, das integral mit der Aktuatoreinheit 13 ausgebildet ist. Konkret ist das Aktuatoranschlusskabel 14 fest mit dem pyrotechnischen Aktuator 17 verbunden. Die Verbindung zwischen dem Aktuatoranschlusskabel 14 und dem Aktuator 17 ist insbesondere nicht zerstörungsfrei lösbar. Insofern ist die Aktuatoreinheit 13 insgesamt steckverbinderfrei ausgebildet.

Das Aktuatoranschlusskabel 14 umfasst zwei Litzen 15, die zumindest abschnittsweise in einem Isolierschlauch 16 angeordnet sind. Der Isolierschlauch 16 ist mit dem Aktuator 17 verbunden. Insbesondere kann der Isolierschlauch 16 fest mit dem Aktuator 17 klemmverbunden sein. In Figur 2 ist gut erkennbar, dass die Litzen 15 über den Isolierschlauch 16 vorstehen und zumindest abschnittsweise freiliegen. Die Litzen 15 weisen einen innenliegenden elektrisch leitenden Draht bzw. ein innenliegendes, elektrisch leitendes Drahtbündel auf, das durch eine Isolierung ummantelt ist. Der Isolierschlauch 16 bildet zumindest abschnittsweise eine zusätzliche Isolierung. Der Isolierschlauch 16 kann dazu als Schrumpfschlauch bzw. Rundcrimpschlauch ausgebildet sein.

Die freien Litzenenden der Litzen 15 des Aktuatoranschlusskabels 14 sind jeweils mit einem Steckelement 18 versehen. Das Steckelement 18 kann insbesondere als Kabelschuh ausgebildet sein, der mit den freigelegten Drähten der Litze 15 crimpverbunden ist. Das Steckelement 18 dient dazu, die Aktuatoreinheit 13 an den gemeinsamen Steckverbinder 11 anzuschließen. Das Verbinden des Steckelements 18 mit dem Steckverbinder erfolgt üblicherweise bei der Herstellung des Kabelbaums 10 und bildet eine feste Verbindung. Insbesondere ist das Steckelement 18 vorzugsweise mit dem Steckverbinder verrastet, so dass ein ungewolltes Lösen des Steckelements 18 vermieden wird.

Zur Herstellung des Kabelbaums 10 wird die Aktuatoreinheit 13 vorzugsweise als einheitliche Baugruppe bereitgestellt. Ferner wird das Modulanschlusskabel 12 mit dem Steckverbinder 11 und den Konnektoren 19 vorzugsweise als einheitliche Baugruppe bereitgestellt. Insofern liegen insbesondere zur Endmontage des Kabelbaums 10 lediglich die Aktuatoreinheit 13 mit dem integrierten Aktuatoranschlusskabel 14 und das Modulanschlusskabel 12 vor, wobei das Modulanschlusskabel 12 bereits fest mit dem Steckverbinder 11 verbunden ist. Dabei belegt das Modulanschlusskabel 12 nicht alle Steckplätze des Steckverbinders 11. Bei der Endmontage sind daher lediglich die Steckelemente 18 in die verbleibenden Steckplätze des Steckverbinders 11 einzusetzen und darin fest zu verankern. Der Steckverbinder 11 kann dazu eine Kabelverriegelung aufweisen, die eine Diskonnektierung des Modulanschlusskabels 12 und/oder des Aktuatoranschlusskabels 14 verhindert.

### Bezugszeichenliste

- 1: Kabelbaum
- 11: Steckverbinder
- 12: Modulanschlusskabel
- 13: Aktuatoreinheit
- 14: Aktuatoranschlusskabel
- 15: Litze
- 16: Isolierschlauch
- 17: Aktuator
- 18: Steckelement
- 19: Konnektor

## Patentansprüche

1. Kabelbaum (10) für ein Gassackmodul eines Fahrzeuginsassensicherheitssystems, insbesondere für ein Fahrerairbagmodul, mit
- einem Steckverbinder (11) zum Anschluss an einen pyrotechnischen Anzünder des Gassackmoduls,
- wenigstens einem mit dem Steckverbinder (11) verbundenen Modulanschlusskabel (12) zur Verbindung des Steckverbinders (11) mit einem Fahrzeugkabelbaum und
- wenigstens einer Aktuatoreinheit (13) mit einem pyrotechnischen Aktuator (17) und einem Aktuatoranschlusskabel (14), das mit dem Steckverbinder (11) verbunden ist,
**dadurch gekennzeichnet, dass** das Aktuatoranschlusskabel (14) mit der Aktuatoreinheit (13) integral ausgebildet ist und wenigstens eine Litze (15) mit einem freien Litzenende aufweist, wobei das Litzenende mit einem Steckelement (18) versehen ist, das sich in einen Steckplatz des Steckverbinders (11) erstreckt.

2. Kabelbaum (10) nach Anspruch 1, **dadurch gekennzeichnet, dass** das Aktuatoranschlusskabel (14) unlösbar, insbesondere steckverbinderfrei, mit dem Aktuator (17) verbunden ist.

3. Kabelbaum (10) nach Anspruch 1 oder 2, **dadurch gekennzeichnet, dass** das Steckelement (18) eine Litzenendhülse ist.

4. Kabelbaum (10) nach einem der vorhergehenden Ansprüche, **dadurch gekennzeichnet, dass** das Aktuatoranschlusskabel (14) zwei Litzen (15) umfasst, die zumindest abschnittsweise durch einen Isolierschlauch (16) umhüllt sind.

5. Kabelbaum (10) nach Anspruch 4, **dadurch gekennzeichnet, dass** der Isolierschlauch (16) fest mit einem Gehäuse des Aktuators (17) verbunden, insbesondere klemmverbunden, ist.

6. Kabelbaum (10) nach einem der vorhergehenden Ansprüche, **dadurch gekennzeichnet, dass** das Modulanschlusskabel (12) an einem fahrzeugseitigen Kabelende wenigstens einen Konnektor (19) zur elektrischen Verbindung mit dem Fahrzeugkabelbaum aufweist.

7. Kabelbaum (10) nach Anspruch 6, **dadurch gekennzeichnet, dass** der Konnektor (19) mit einem komplementären Verbindungselement des Fahrzeugkabelbaums steckverbindbar ist.

8. Gassackmodul mit einem Kabelbaum (10) nach einem der vorhergehenden Ansprüche.

9. Fahrzeugverkabelung mit einem Kabelbaum (10) nach wenigstens einem der Ansprüche 1 bis 7 und/oder einem Gassackmodul nach Anspruch 8.

10. Fahrzeugverkabelung nach Anspruch 9, **dadurch gekennzeichnet, dass** der Kabelbaum (10), insbesondere das Modulanschlusskabel (12), mit einem Fahrzeugkabelbaum, insbesondere einem Lenkradkabelbaum, elektrisch verbunden ist.

11. Fahrzeuginsassensicherheitssystem mit einem Kabelbaum (10) nach wenigstens einem der Ansprüche 1 bis 7 und/oder einem Gassackmodul nach Anspruch 8 und/oder einer Fahrzeugverkabelung nach Anspruch 9 oder 10.

12. Verfahren zur Herstellung eines Kabelbaums (10) nach einem der Ansprüche 1 bis 7 mit den folgenden Schritten:
- Bereitstellen einer Aktuatoreinheit (13) mit integriertem Aktuatoranschlusskabel (14), eines Modulanschlusskabels (12) und eines Steckverbinders (11); und
- Verbinden des Modulanschlusskabels (12) und des Aktuatoranschlusskabels (14) mit dem Steckverbinder (11).

13. Verfahren zur elektrischen Anbindung eines Aktuators (17) an einen Fahrzeugkabelbaum, insbesondere einen Lenkradkabelbaum, mit den folgenden Schritten:
- Bereitstellung eines Kabelbaums (10) nach einem der Ansprüche 1 bis 7; und
- Verbinden des Modulanschlusskabels (12) mit dem Fahrzeugkabelbaum.

## Claims

1. A wiring harness (10) for an airbag module of a vehicle occupant safety system, especially for a driver airbag module, comprising
- a connector (11) for connection to a pyrotechnic igniter of the airbag module,
- at least one module connecting cable (12) connected to the connector (11) for connecting the connector (11) to a vehicle wiring harness, and
- at least one actuator unit (13) comprising a pyrotechnic actuator (17) and an actuator connecting cable (14) which is connected to the connector (11),
**characterized in that** the actuator connecting cable (14) is formed integrally with the actuator unit (13) and has at least one strand (15) with a free strand end, the strand end being provided with a plug member (18) extending into a slot of the connector (11).

2. The wiring harness (10) according to claim 1, **characterized in that** the actuator connecting cable (14) is connected to the actuator (17) non-detachably, especially free from connectors.

3. The wiring harness (10) according to claim 1 or 2, **characterized in that** the plug member (18) is a strand end sleeve.

4. The wiring harness (10) according to any one of the preceding claims, **characterized in that** the actuator connecting cable (14) comprises two strands (15) which are wrapped at least in portions with an insulating tube (16).

5. The wiring harness (10) according to claim 4, **characterized in that** the insulating tube (16) is tightly connected, especially connected by clamping, to a housing of the actuator (17).

6. The wiring harness (10) according to any one of the preceding claims, **characterized in that** the module connecting cable (12) includes at least one connector (19) for electric connection to the vehicle wiring harness at a vehicle-side cable end.

7. The wiring harness (10) according to claim 6, **characterized in that** the connector (19) can be plug-connected to a complementary connecting element of the vehicle wiring harness.

8. An airbag module comprising a wiring harness (10) according to any one of the preceding claims.

9. Vehicle cabling comprising a wiring harness (10) according to at least one of the claims 1 to 7 and/or an airbag module according to claim 8.

10. The vehicle cabling according to claim 9, **characterized in that** the wiring harness (10), especially the module connecting cable (12), is electrically connected to a vehicle wiring harness, especially to a steering wheel wiring harness.

11. A vehicle occupant safety system comprising a wiring harness (10) according to at least one of the claims 1 to 7 and/or an airbag module according to claim 8 and/or vehicle cabling according to claim 9 or 10.

12. A method of producing a wiring harness (10) according to any one of the claims 1 to 7, comprising the following steps of:
- providing an actuator unit (13) having an integrated actuator connecting cable (14), a module connecting cable (12) and a connector (11); and
- connecting the module connecting cable (12) and the actuator connecting cable (14) to the connector (11).

13. A method of electrically connecting an actuator (17) to a vehicle wiring harness, especially to a steering wheel wiring harness, comprising the following steps of:
- providing a wiring harness (10) according to any one of the claims 1 to 7; and
- connecting the module connecting cable (12) to the vehicle wiring harness.

## Revendications

1. Faisceau de câbles (10) pour un module airbag d'un système de sécurité pour occupants d'un véhicule, en particulier pour un module d'airbag conducteur, incluant
- un connecteur enfichable (11) pour la connexion à un allumeur pyrotechnique du module airbag,
- au moins un câble de raccordement du module (12) connecté au connecteur enfichable (11) pour connecter le connecteur enfichable (11) à un faisceau de câbles du véhicule et
- au moins une unité d'actionnement (13) avec un actionneur pyrotechnique (17) et un câble de raccordement de l'actionneur (14) qui est connecté au connecteur enfichable (11),
**caractérisé en ce que** le câble de raccordement de l'actionneur (14) est formé d'un seul tenant avec l'unité d'actionnement (13) et a au moins un brin (15) avec une extrémité de brin libre, pour lequel l'extrémité de brin est prévue munie d'un élément enfichable (18) qui s'étend dans une zone de connexion du connecteur enfichable (11).

2. Faisceau de câbles (10) selon la revendication 1, **caractérisé en ce que** le câble de raccordement de l'actionneur (14) est connecté en permanence à l'actionneur (17), notamment libre de connecteur.

3. Faisceau de câbles (10) selon la revendication 1 ou 2, **caractérisé en ce que** l'élément enfichable (18) est un manchon d'extrémité toronné.

4. Faisceau de câbles (10) selon l'une des revendications précédentes, **caractérisé en ce que** le câble de raccordement de l'actionneur (14) comprend deux brins (15) qui sont au moins partiellement recouverts par un tube isolant (16).

5. Faisceau de câbles (10) selon la revendication 4, **caractérisé en ce que** le tube isolant (16) est solidaire, notamment serré, avec le corps de l'actionneur (17).

6. Faisceau de câbles (10) selon l'une des revendications précédentes, **caractérisé en ce que** le câble de raccordement du module (12) possède en extrémité de câble côté véhicule au moins un connecteur (19) pour la connexion électrique avec le faisceau de câbles du véhicule.

7. Faisceau de câbles (10) selon la revendication 6, **caractérisé en ce que** le connecteur (19) peut être enfiché dans un élément de liaison complémentaire du faisceau de câbles du véhicule.

8. Module airbag avec faisceau de câbles (10) selon l'une des revendications précédentes.

9. Câblage de véhicule avec un faisceau de câbles (10) selon au moins l'une des revendications 1 à 7 et/ou un module airbag selon la revendication 8.

10. Câblage de véhicule selon la revendication 9, **caractérisé en ce que** le faisceau de câbles (10), en particulier le câble de raccordement du module (12), est relié électriquement à un faisceau de câbles de véhicule, notamment un faisceau de câbles de volant de direction.

11. Système de sécurité pour occupants d'un véhicule avec un faisceau de câbles (10) selon au moins l'une des revendications 1 à 7 et/ou un module airbag selon la revendication 8 et/ou un câblage de véhicule selon la revendication 9 ou 10.

12. Procédé de réalisation d'un faisceau de câbles (10) selon l'une quelconque des revendications 1 à 7, comprenant les étapes suivantes :
- Fournir d'une unité d'actionneur (13) avec un câble de raccordement de l'actionneur intégré (14), un câble de raccordement du module (12) et un connecteur enfichable (11) ; et
- Raccorder le câble de raccordement du module (12) et le câble de raccordement de l'actionneur (14) au connecteur enfichable (11).

13. Procédé de connexion électrique d'un actionneur (17) à un faisceau de câbles de véhicule, en particulier un faisceau de câbles de volant de direction, comprenant les étapes suivantes :
- Fournir un faisceau de câbles (10) selon l'une quelconque des revendications 1 à 7 ; et
- Connecter le câble de raccordement du module (12) au faisceau de câbles du véhicule.
